Europäisches Patentamt

(19) European Patent Office

Office européen des brevets

(11) Publication number: **0 009 863**

**A1**

(12) # EUROPEAN PATENT APPLICATION

(21) Application number: **79301506.6**

(22) Date of filing: **30.07.79**

(51) Int. Cl.³: **F 16 B 5/04**
**B 63 H 9/06**

(30) Priority: **09.08.78 GB 3271878**

(43) Date of publication of application:
**16.04.80 Bulletin 80/8**

(84) Designated Contracting States:
**DE FR NL**

(71) Applicant: **BENNET-BOWLER (SP) LIMITED**
**Wood Lane Industrial Estate**
**Hayfield, Stockport Cheshire, SK12 5EU(GB)**

(72) Inventor: **Scowen, John Malcolm**
**112 Manchester Road Chapel-En-Le-Frith**
**via Stockport, Cheshire(GB)**

(74) Representative: **Attfield, Donald James et al,**
**BROOKES, MARTIN & WILSON Prudential Buildings 5 St.**
**Philip's Place**
**Birmingham B3 2AF(GB)**

(54) **Method and apparatus for the attachment of reinforcing elements or fitments to thin sheet materials.**

(57) Disclosed is a method and apparatus for attaching reinforcing headboards (30,50) to a boat sail (20). One headboard (50) having a plurality of hollow rivets (51) located therein, is positioned on the lower platen (2) of a pneumatic press and located by pegs (8) extending from the platen (2) into the rivets (51), the pegs (8) being retractable into the platen (2) against springs (10) contained therein. The upper platen (3) of the press contains a series of cutters (33) positioned to correspond with the pegs (8) in the lower platen (2) and having a portion (34) which is a sliding fit into rivets (51) and a shoulder (35) adapted to turn over the upper ends (52) of the rivets. The upper headboard (30) is located adjacent upper platen (3) and contains rivet holes (31) aligned with the cutters (33). The sail (20) is positioned on the lower platen (2) to rest on the ends (52) of the rivets (51) and the press caused to force the cutters (33) into the rivets (51) thereby punching holes in the sail (20) through which the rivets (51) pass, before passing through the holes (31) in the upper headboard (30) and subsequently turning the ends (52) of the rivets (51) over onto the upper headboard (30) to sandwich the sail (20) between the said headboards (30, 50).

./...

Croydon Printing Company Ltd.

FIG.1

FIG.2

-1-

## IMPROVEMENTS IN OR RELATING TO THE ATTACHMENT OF REINFORCING ELEMENTS OR FITMENTS TO THIN SHEET MATERIALS

The present invention relates to a method and apparatus for attaching a reinforcing element or a fitment to thin sheet material, especially fabric material.

The traditional method of attaching a reinforcing element, for example, to thin sheet material such as sail cloth requires a multi-stage operation. The sail cloth is first apertured and the reinforcing elements then applied. Where the element is a headboard consisting of two plates sandwiching the sail cloth and which is required to be riveted in position, a number of apertures have to be individually formed in the sail cloth, the plates and rivets placed in position and then the sail taken to a hydraulic press where the rivets are flared to effect closure.

This is a labour intensive expensive and time consuming operation.

We have now developed a method for attaching a reinforcing element or a fitment to thin sheet material in which the punching and riveting operations are carried out simultaneously resulting in considerable savings in both time and cost.

Accordingly, from one aspect, the present invention provides a method for the attachment of a reinforcing element or a fitment to thin sheet material, said element or fitment comprising at least one member having a cylindrical portion including an end face for penetration through said sheet material, wherein said member is positioned between the platens of a press tool, one said platen supporting said cylindrical portion, and the other platen including means to flare out the

-2-

said end face of said cylindrical portion, the sheet material being positioned over said member to rest on the said end face of the cylindrical portion and the press tool operated to cause the said face to penetrate the said material and the end of said cylindrical portion to be flared to attach the element or fitment to the said material.

The reinforcing element may consist of two or more members and include at least one cylindrical portion, and one member of said element, including said cylindrical portion, positioned on one platen of a press tool such that the free end of said cylindrical portion stands proud of said member and the other member of said element or fitment located on the other platen of said press tool, the material positioned over said first member to rest on said proud end of said cylindrical portion and the press tool operated to cause the cylindrical portion of the element to penetrate the said material and at least the proud end thereof to be flared to attach all members of the element or fitment to the material.

The present invention also includes apparatus to accomplish the said method comprising a press including upper and lower platens, one said platen including means to support a member including a cylindrical portion having an end face adapted to penetrate said sheet material and the other said platen including means to cause said end face to penetrate the material and to flare the said end face to attach said member to said sheet material.

In a preferred embodiment the cylindrical portion is tubular and is supported on said one platen by means extending into said portion.

In a more preferred embodiment the supporting means comprises a cylindrical support retractable against resilient means such as a spring or pneumatic or hydraulic pressure into said one platen and said other platen includes means adapted to extend through the material and into said tubular portion on operation of said press and to turn over the ends of the tubular portions.

The expression "fitment" includes decorative rivets or locking devices such as may be applied to ladies hand bags, for example.

The thin sheet material may be metal, paper, fabric, such as boat sail, or plastics material.

In one embodiment a reinforcing element may be an eyelet consisting of two ring members and a liner in which case both ends of the liner (the cylindrical portion of the reinforcing element) are rimmed by the press to attach the rings to the material around the hole punched therein by the liner. If desired, the ring members may include a multiplicity of integral teeth which pierce the material to provide additional grip thereon.

In another embodiment a reinforcing element or fitment may include two opposed plate members, which may be metal or plastic, for example, between which the thin material is sandwiched by riveting. Both plate members contain concentric rivet holes and the rivets are retained, e.g. are a press fit, in the holes formed in the member located on the first pressure plate of the press tool referred to above. The other plate member is located on the other pressure plate such that the holes in the said plates are concentrically aligned immediately prior to operation of the press. Such an element or fitment may also include an eyelet. The rivets employed in this embodiment are preferably of hollow tubular construction.

A particular example of an element of the latter embodiment is a headboard which is attached to the apex of a sail and includes an eyelet through which the rope used to raise the sail is fixed.

In this example the plate members are normally pre-formed from a plastics material, such as nylon, and contain concentrically aligned holes for rivets and an eyelet. The rivets may be bonded, into one of the plate members e.g. during the manufacture thereof. The rivets may also be retained in the plate by means of a piece of sail cloth containing holes corresponding to the rivets, but of marginally smaller diameter, placed against the inside face of the plate to cons-

-4-

train the rivets against dropping out from the said plate. The eyelet ring members may be bonded to the outside surface of each plate around the corresponding eyelet hole.

A preferred embodiment of the present invention will now be described with reference to the accompanying drawings in which:

Figure 1 is a diagrammatic exploded representation of a press adapted to accomplish the present invention and showing a sail and headboard in position for attachment, and

Figure 2 is a diagrammatic representation of a cross section of a portion of the press and other components of Figure 1.

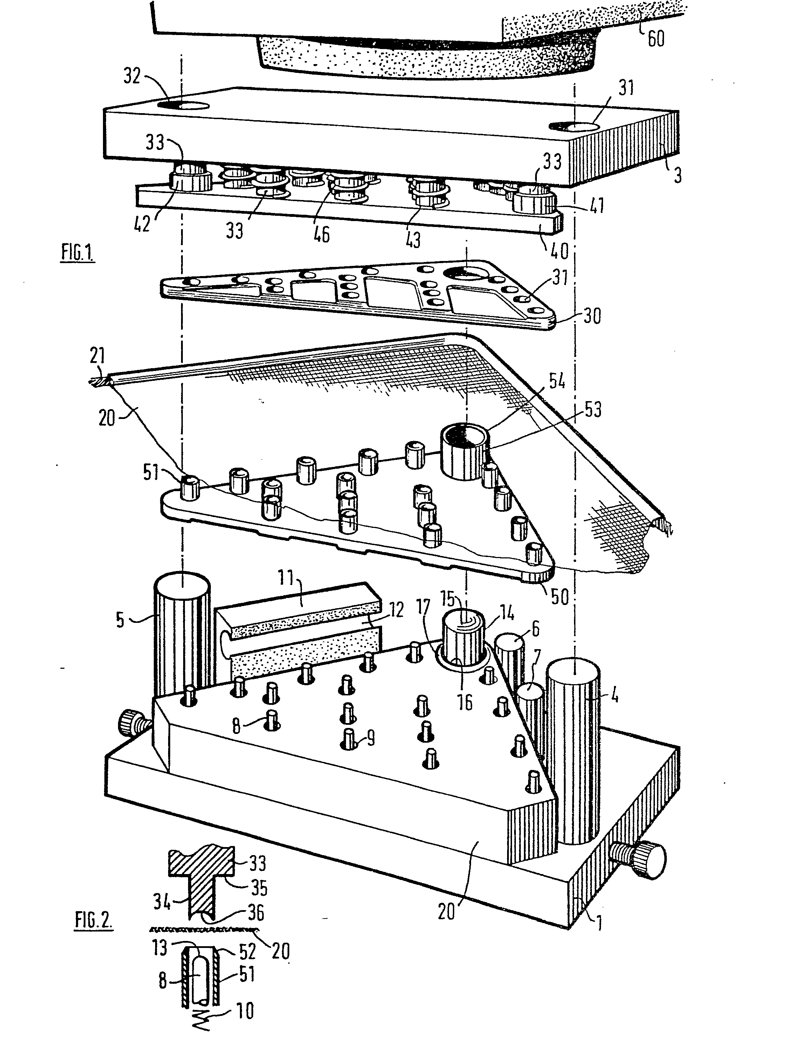

As illustrated in Figure 1 a pneumatically operated press is set up for attaching headboards to either side of a boat sail section to reinforce the sail around an eyelet through which a halyard may be taken.

A lower press plate 1 includes a lower plate 2 located between guide pillars 4 and 5 and stops 6 and 7. A plurality of upstanding locating pegs 8, located as a sliding fit in orifices 9, are contained in platen 2, said orifices 9 containing springs 10 acting to maintain pegs 8 proud of the platen face. The orifices 9 are sufficiently deep to permit pegs 8 to retract until the upper doomed surfaces 13 are flush with the platen face. The larger diameter peg 14 having a domed upper surface 15 is located in an orifice 16 and similarly spring loaded, a channel shaped recess 17 is provided around orifice 16.

The pattern of the pegs 8 and 14 corresponds to rivet holes in headboards 30 and 50 hereinafter described in greater detail.

Upper platen 3 contains holes 31 and 32 which are a sliding fit over pillars 4 and 5. Depending from the lower face of platen 3 are a plurality of cutters 33 patterned to be in precise alignment with pegs 8 in platen 2. A large cutter (not shown) is positioned in alignment with peg 14. Each cutter 33 includes a shank portion 34 having a concave headportion 36 and shoulders 35 shaped for turning the open end of a hollow rivet. The large cutter opposite peg 14 is similarly shaped.

An ejector plate 40 is located below platen 3 and contains a plurality of holes 43 corresponding to cutters 33 and through which said cutters extend. Guide collars 41 and 42 are positioned about two said holes and are a sliding fit around the corresponding cutters. Compression springs 46 are positioned around each said cutter, with the exception of surrounded by the collars 41 and 42, and bear against the ejector plate 40 and the platen 3. The ejector plate is retained in position by shoulder screws (not shown) which pass through the platen 3 and are screw-threaded into the plate.

A first headboard 50 is in the form of a pre-formed plate containing rivets 51 and an eyelet liner 53 (an eyelet ring being positioned beneath the plate); the rivets 51 and eyelet liner 53 have chamfered end portions 52 and 54 respectively. The headboard 50 is positioned on the lower platen 2, pegs 8 and 14 bearing a clearance fit in rivets 51 and eyelet liner 53 respectively and extend therein to a point below the chamfered end portions to locate the headboard on the platen.

Second headboard 30 contains corresponding rivet holes 31 and eyelet hole 32, the end of the rivet holes on the under side of the headboard are countersunk, to facilitate passage of the rivets therethrough during the pressing operation. The said headboard is retained on the ejector plate 40 by means of tapered pins (not shown).

The sail member 20 is placed between the headboard 30 and 50 and is positioned by locating bolt rope 21 in recess 12 provided in nylon block 11 adjacent platen 2. Block 11 is spring loaded against plate 1 to allow downwards movement during the pressing operation. When in position the sail rests on the upper ends of the rivets 51 and eyelet liner 53.

The dimensions of shank 34 of cutter 33 are arranged such that the said shank is a sliding fit into the rivets 51 but has a length less than the total thickness of the combined
headboards. The cutter for the eyelet is similarly dimensioned.
When the upper press plate 60 is activated by compressed air,
the upper headboard 30, under pressure from ejector plate 40
and upper platen 2 initially retains the sail cloth 20 against
rivets 51 and eyelet liner 53, as the press plate 60 descends,
cutters 33 and the chamfered ends 52 of rivets 51 punch holes
in the sail cloth 20 to permit the rivets and eyelet liner to
pass through the upper headboard 30. On completion of the
power stroke of the press the ends of the rivets are turned
over to retain the two headboards in position on either side
of the sail which is firmly sandwiched therebetween. Simultaneously both ends of the eyelet liner 53 are turned over
the corresponding eyelet rings.

On completion of the pressure stroke the pressure plate
60 retracts and the ejector plate springs force the upper
platen upwards to enable the sail and reinforcing headboards
to be released.

It is desirable that the radius of the domed heads 13
of pegs 8 is smaller than that of the concave end 36 of cutters
33 in order that the press may be used to attach headboards
or fitments with fewer rivet holes than pegs in platen 2,
without punching unnecessary holes in the material to which the
headboard or fitment is being attached. In the absence of
rivets over the pegs the contact between the cutters and the
domed head of the pegs is a point contact only centrally of
both pegs and cutter and hence the material is undamaged by
the pressure therebetween.

A further press tool which may be used also comprises
lower and upper pressure plates. The lower pressure plate
includes a plurality of vertical cylindrical supports corresponding to the rivet and eyelet holes in the pre-formed
plate member. The dimensions of the supports are such that
they can extend into the hollow rivets by an amount not greater
than the total thickness of the two preformed plate members,
with corresponding dimensions for the eyelet support. A
channel-shaped recess is formed in the pressure plate around the eyelet support.  The upper pressure plate includes a plurality of downwardly extending cylindrical supports corresponding to the supports in the lower plate but which are spring loaded such that, under pressure, they can retract, into the pressure plate to provide a flush surface.  A channel recess is also formed in the upper pressure plate around the spring loaded eyelet support.

The preformed plate, including the rivets, is located on the lower pressure plate with the supports projecting into the hollow rivets and a liner is placed over the eyelet support. The other plate member is located on the upper pressure plate such that the spring loaded supports are concentrically located in the rivet and eyelet holes.  Both pressure plates are inserted into hydraulic press and a sail positioned between the plate members such that they will be in the correct position, and the press operated.  The rivets first punch holes in the sail cloth, the spring loaded supports in the upper pressure plate enter the top of the rivets (and liner) to maintain them in a vertical position, following which the ends thereof are flared to secure the plates together sandwiching the said cloth therebetween.  Simultaneously the eyelet liner is flared at both ends over the eyelet ring members.

Claims:

1. A method for the attachment of a reinforcing element or a fitment to thin sheet material, characterised in that said element or fitment comprises at least one member having a cylindrical portion including an end face for penetration through the said sheet material, wherein said member is positioned between the platens of a press tool, one said platen supporting said cylindrical portion and the other platen including means to flare out the said end face of said cylindrical portion, the sheet material being positioned over said member to rest on said end face and the press tool operated to cause the said face to penetrate the said material and the end of the said cylindrical portion to be flared to attach the element or fitment to the said material.

2. A method according to claim 1 characterised in that the thin sheet material is a boat sail (20).

3. A method according to claim 1 or 2 characterised in that the reinforcing element comprises an eyelet consisting of two ring members and a liner (14).

4. A method according to claims 1, 2, or 3 characterised in that the reinforcing element comprises two opposed plastic or metallic plate members between which the thin material (20) is sandwiched by riveting.

5. A method according to claim 4 characterised in that one said headboard is pre-formed with rivets located in appropriate rivet holes prior to being positioned on one said platen.

6. Apparatus for attaching a reinforcing element or fitment to thin sheet material comprising a press including upper (3) and lower (2) platens, characterised in that one said platen (2) includes means to support a member including a cylindrical portion (51, 14) having an end face (52,54) adapted to penetrate said thin sheet material (20) and the other said platen (3) including means (33,35) to cause said end face (52,54) to penetrate said material and flare said end face to attach said member to said sheet material.

7. An apparatus according to claim 6 characterised in that the cylindrical portion (52,54) is tubular and is located on one said platen (2) by means (8) extending into said tubular portion.

8. An apparatus according to claim 7 characterised in that the said supporting means comprises a cylindrical support (8) retractable into said one platen (2) against resilient means (10) normally maintaining said supporting means proud of said platen and said other platen includes second means (33) adapted to extend through said thin material and into said tubular portion on operation of said press and to turn over the ends of said tubular portion.

9. An apparatus according to claim 11 characterised in that a plate (40) is positioned between said platens (2,3) said plate being positioned on said other platen (3) and containing orifices (43) through which said second means (33) extend, resilient spring members (46) bearing against said platen (3) and said plate (40), being located around each said means (33).

10. An apparatus according to claim 9 characterised in that said second means (33) has a concave end face (36) and said cylindrical support (8) extending into said tubular member (51) has a domed end face (13), the domed end face of said supporting member being of smaller radius than the radius of the concave end face of said second means.

0009863

1/1

FIG.1.

FIG.2.

0009863

Application number

## European Patent Office

### EUROPEAN SEARCH REPORT

EP 79 301 506.6

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim · | |
| | CH - A - 253 764 (UNITED SHOE MACHI-NERY) <br> * fig. 2 * <br> -- | 1,6,8, 9,10 | F 16 B 5/04 <br> B 63 H 9/06 |
| | DE - C - 384 861 (MURRAY) <br> * fig. 1 to 4 * <br> -- | 1 | |
| | US - A - 3 010 199 (SMITH et al.) <br> * fig. 6, 7 * <br> -- | 1 | **TECHNICAL FIELDS SEARCHED (Int.Cl.³)** |
| | US - A - 3 544 143 (OHLSSON) <br> * fig. 1 * <br> -- | 1 | A 41 H 37/00 <br> B 21 J 15/00 <br> B 42 D 3/00 |
| | US - A - 3 828 517 (JOHNSON) <br> * fig. 2 * <br> -- | 1 | B 63 H 9/00 <br> F 16 B 5/04 <br> F 16 B 19/00 |
| | US - A - 3 653 353 (DAVIS) <br> * fig. 1 to 4 * <br> -- | 2,3 | |
| | US - A - 3 988 996 (JASPER) <br> * fig. 2 to 4 * <br> -- | 2,3 | |
| | US - A - 3 137 874 (HILDMANN et al.) <br> * fig. 9 to 14 * <br> -- | 6 | **CATEGORY OF CITED DOCUMENTS** <br> X: particularly relevant <br> A: technological background <br> O: non-written disclosure <br> P: intermediate document |
| A | CH - A - 12 818 (KAISER) <br> -- | | T: theory or principle underlying the invention <br> E: conflicting application <br> D: document cited in the application |
| A | FR - A1 - 2 277 263 (I.T.W. DE FRANCE) <br> -- | | L: citation for other reasons |
| A | US - A - 3 730 560 (ABILDGAARD et al.) <br> ---- | | &: member of the same patent family, corresponding document |

| X | The present search report has been drawn up for all claims | | |
|---|---|---|---|
| **Place of search** <br> Berlin | **Date of completion of the search** <br> 11-10-1979 | **Examiner** <br> ZAPP | |

EPO Form 1503.1 06.78